# EUROPEAN PATENT SPECIFICATION

(11) **EP 1 597 082 B1**
(45) Date of publication and mention of the grant of the patent: **25.05.2016**
(21) Application number: 03786130.9
(22) Date of filing: 16.12.2003
(51) Int. Cl.: C40B 40/06, C40B 50/14, C40B 60/14, B01J 19/00, B41J 2/21, G01N 35/10, B82Y 30/00

(54) **IMPROVED PRINTING METHOD AND APPARATUS**
VERBESSERTES DRUCKVERFAHREN UND VORRICHTUNG
PROCEDE ET APPAREIL D'IMPRESSION PERFECTIONNÉS

(30) Priority: 20.02.2003 GB 0303861
(43) Date of publication of application: 23.11.2005
(73) Proprietor: Arrayjet Limited, Roslin EH25 9RE (GB)
(72) Inventor: MANNING, Howard, John, Edinburgh EH9 2DB (GB); MITCHELL, Benjamin, Bruce, Edinburgh EH1 3JU (GB)
(74) Representative: Thom, Russell
(86) International application number: PCT/GB2003/005524
(87) International publication number: WO 2004/073988

(56) References cited:
- EP-A- 0 908 725
- EP-A- 1 189 432
- WO-A-02/11889
- WO-A-02/24325
- US-A- 4 956 648
- US-A- 5 819 649
- US-A1- 2001 051 334
- US-A1- 2003 012 698

## Description

The present invention relates to the field of printing, and in particular to an improved method and apparatus for printing from a printhead with a linear array of nozzles.

Ink jet printheads can be used to position spots of liquids, for example biological samples, on substrates such as glass slides. An important application is the manufacture of DNA microarrays.

It is usually required to print one, two, three or more spots of each liquid onto each of a large number (tens to hundreds) of substrates. There is typically a very large number (hundreds to tens of thousands) of different liquids to be printed onto the substrates, so printing can be take an extremely long time.

It is normal practice to trigger the ejection of drops from an ink jet printhead by means of electronic pulses from an encoder that is linked to the relative motion of the printhead and substrate. When a pulse reaches the printhead, it prints from whichever nozzles are specified by the data in the printing image.

Patent application WO 02/11889 discloses a method involving an ink jet printhead having multiple chambers, each chamber being associated with a nozzle through which a liquid is discharged during a printing operation. The printhead can be used to print multiple different liquids at the same time without cross-contamination between the liquids, despite the fact that the chambers are connected by one or more manifolds internal to the printhead. The liquids are introduced via contiguous groups of nozzles into the associated chambers and printed before they have time to mix by diffusion via the manifolds.

In the manufacture of DNA microarrays, the printhead need not be oriented in the manner conventional to the ink jet printing industry. This is a consequence of the need to produce an array of spots of the liquids on the slide, rather than an image as such. It may be advantageous to orientate the printhead so that its row of nozzles is parallel to the direction of relative motion during printing to allow finely spaced spots of liquid.

For particular printing applications, superposition of drops may be required or desired. Accurate superposition of several drops onto the same spot on a substrate requires the printhead to eject drops from the nozzles at precisely the correct time.

One possibility for the triggering is that the trigger interval is equal to the nozzle spacing or the spacing divided by a small integer, to a reasonable approximation, allowing the positioning of each liquid to be achieved sufficiently accurately. The difficulty with this approach is that the spacing of the multiple spots of different liquids can be adjusted only as finely as the encoder interval. A further problem is that if the nozzle spacing is awkward, a suitable encoder may not be available. Any errors due to the awkward spacing are cumulative when more than two drops are deposited. In addition to producing imperfect positioning within each spot, this scheme suffers from the disadvantage that it permits the spots of different liquids to be positioned only to the accuracy of an encoder pulse.

An example of this approach might be as follows: if the printhead has nozzles at a spacing such as 137.14 µm, as is the case with the XaarJet XJ126R, the encoder interval could be 20 µm. Using the fact that 7×20=140 ≈ 137.14 µm, every seventh pulse could be used to trigger contiguous nozzles. Superposition would appear to be sufficiently accurate given that the spot produced by a single drop on a typical substrate is about 100 µm diameter.

It is desirable for the superposition to be more accurate, and for multiple spots of different liquids to be positioned with high precision. This can be achieved by using an encoder giving pulses at closer intervals, that is, a small fraction of the nozzle spacing (though not necessarily equal to the nozzle spacing divided by an integer). An example of this approach is the use of a 1 µm encoder. Drop superposition and spot positioning would then be superior.

However, the image controlling the printing, consisting of ones representing ejection of drops and zeroes where no drop is required, would have to be packed with a high proportion of zeros to achieve the required positioning of the spots. Since the ink jet printhead can only print at a limited rate, even when "printing" zeroes or blanks, this approach limits the linear speed of the printhead and results in slow printing. If the printhead can print drops at a frequency of a few kiloHertz, the linear speed is limited to a few millimetres per second, which is far too slow for a cost-effective printing process.

Furthermore, the image will often be very large, which can result in electronic and software problems.

Printing methods and schemes have been developed to improve certain aspects of printing. For example, US4956648A discloses a printer driver circuit for correcting the printing dot positions of a printer apparatus in order to correct arbitrary nozzle intervals which can make it difficult to print images in a line when dots are printed in both a forward and reverse movement.

Whilst this scheme allows correction of dot placement during both forward and reverse movement it still does not mitigate the drawbacks of the prior art.

It is a further aim of the invention to provide spot positioning of superior accuracy.

It is a further aim of the invention to provide a method for triggering a printhead that reduces the amount of data sent to a printhead.

It is a further aim of the invention to provide a printing method and device with improved reliability.

Additional aims and objects of the invention will become apparent from a reading of the following description.

According to an aspect of the invention, there is provided apparatus for triggering a printhead, the printhead having a linear array of nozzles oriented in an axis, the apparatus comprising:
- a processing module controlling the transfer of printing triggers to the printhead;
- an encoder module adapted to provide a series of pulses to the processing module, the pulses corresponding to locations of the printhead;
- wherein the processing module receives pulses from the encoder module at intervals representative of a fixed unit of spatial displacement of the printhead, and the processing unit transfers printing triggers to the printhead at one or more print intervals representative of a plurality of said fixed units of spatial displacement of the printhead.

Preferably, the processing unit transfers printing triggers to the printhead at a plurality of print intervals. More preferably, the processing unit transfers printing triggers to the printhead at a plurality of different print intervals.

Preferably, the print intervals are selectable.

The fixed unit of spatial displacement of the printhead may be less than 20 µm. Preferably, the fixed unit of spatial displacement of the printhead is less than 5 µm. More preferably, the fixed unit of spatial displacement of the printhead is 1 µm.

Preferably, the print intervals are selectable within 1 µm.

According to another aspect of the invention, there is provided a method of triggering a printhead, the printhead having a linear array of nozzles oriented in an axis, the method comprising the steps of:
- transmitting a series of pulses from an encoder module to a processing module, the pulses corresponding to locations of the printhead, wherein the processing module receives pulses from the encoder module at intervals representative of a fixed unit of spatial displacement of the printhead;
- transferring printing triggers from the processing module to the printhead at print intervals representative of a plurality of said fixed units of spatial displacement of the printhead.

Put another way, the processing unit transfers printing triggers to the printhead at print intervals which correspond to a spatial displacement of the printhead that is equal to an integer multiple of the fixed unit of spatial displacement corresponding to an encoder pulse. That is, the processing unit receives a series of encoder pulses before transferring printing triggers to the printhead.

This has the advantage of reducing the amount of data processed by the printhead, and has a positive effect on printing speed.

Preferably, the processing unit transfers printing triggers to the printhead at a plurality of print intervals. More preferably, the processing unit transfers printing triggers to the printhead at a plurality of different print intervals.

Preferably, the print intervals are selectable.

The fixed unit of spatial displacement of the printhead may be less than 20 µm. Preferably, the fixed unit of spatial displacement of the printhead is less than 5 µm. More preferably, the fixed unit of spatial displacement of the printhead is 1 µm.

Preferably, the print intervals are selectable within 1 µm.

Preferably, the method includes the step of printing drops of liquid on a substrate in response to data received by the printhead. More preferably, the method includes the steps of printing an array of spots.

Preferably, the nozzles of the printhead are arranged in groups, each group comprising a plurality of nozzles, and each group corresponding to a particular liquid. More preferably, the nozzles in each group are contiguous.

The method may comprise the additional step of:
- transferring printing triggers to the printhead to at a series of print intervals corresponding to the spatial separation of the printhead nozzles.

The method may comprise the additional steps of:
- transferring printing triggers to the printhead to at a print interval corresponding to the required spatial separation of the printed drops.

The method may comprise the additional steps of:
- transferring printing triggers to the printhead to at a print interval corresponding to the required spatial displacement of the array of spots and a second, repeated array of spots.

The method may comprise the additional steps of:
- transferring printing triggers to the printhead to at a print interval corresponding to the required spatial displacement of the substrate and a second substrate;
- printing drops on a second substrate.

The method may include the additional steps of:
- transferring print data to the printhead at said print intervals.

The method of an aspect of the invention may include the steps of printing on a substrate by:
- displacing the printhead relative to the substrate along a first axis, the printhead having a linear array of nozzles oriented in the axis,
- superposing drops of a first liquid at a first location on the substrate, wherein at least two drops of the first liquid are printed from distinct nozzles.

The method of an aspect of the invention may include the steps of printing on a substrate by:
- printing a first drop of a first liquid from a first nozzle of the printhead at a first location;
- displacing the printhead relative to the substrate along the axis such that the position of a second nozzle of the printhead corresponds to the first location;
- printing a second drop of the first liquid from the second nozzle of the printhead at the first location.

There will now be described, by way of example only, various embodiments of the invention with reference to the following drawings, of which:
Figure 1a is a representation of a printhead used in accordance with an embodiment of the invention;
Figure 1b shows the printing action of the printhead of Figure 1a;
Figure 1c shows how the printhead of Figure 1a can be used to print a series of spots;
Figure 2 is an example of a schematic representation of a system according to a conventional approach;
Figure 3 is an example of a schematic representation of an image for parallel printing as seen by a single cycle printhead, using a fine encoder, according to a conventional approach;
Figure 4 is an example of a schematic representation of a system according to the invention;
Figure 5 is an example of a schematic representation of an image for parallel printing as seen by a single cycle printhead, using a fine encoder, according to the invention;
Figures 6a to 6d are examples of schematic representations of encoder signals between various components of the system of Figure 4;
Figures 7a to 7c are further examples of schematic representations of encoder signals between various components of the system of Figure 4;
Figure 8 is an example of a schematic representation of an image for parallel printing with a single-cycle printhead, showing repeated spots, and selection of nozzles;
Figure 9 is an example of a schematic representation of an image for parallel printing with a three-cycle printhead.

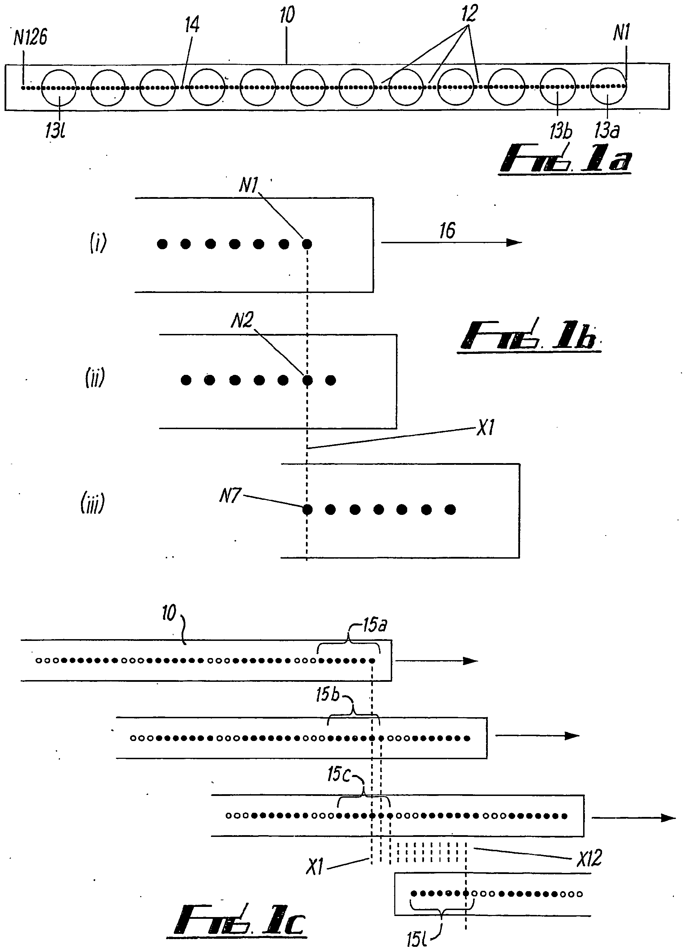

Figures 1a to 1c shows a printhead 10 having a series of nozzles 12 oriented in a linear array 14. In this example, the printhead contains 126 nozzles, labelled N1 to N126, although not all of the nozzles are shown. The printhead moves over a substrate in the direction of the arrow 16.

The circles 13a to 131 represent wells from which liquids are loaded into the printhead. The printhead loads twelve different liquids, one from each of the wells 13. Each liquid is drawn into a group of seven contiguous nozzles, with three intermediate nozzles left unused. Groups of nozzles are labelled as 15a to 151 in Figure 1c.

Figure 1b shows how one group of seven nozzles is used to achieve superposition of up to seven drops onto one spot X1 on a slide. The leading nozzle N1 is triggered to print at the desired position, represented by the dotted line X1. The printhead advances in the direction of the arrow 16 until the second nozzle N2 is at the spot position X1. The nozzle N2 is triggered by a subsequent trigger from the printer electronics. The printhead advances again and the third to seventh nozzles N3 to N7 respectively superpose drops of liquid onto the spot X1 on the substrate. It should be noted that the motion of the printhead is in alignment with the axis defined by the linear array of nozzles 14, and thus displacement of the printhead by the correct distance causes an adjacent nozzle to be aligned exactly over the spot X1.

The other eleven groups of nozzles 15b to 151 print drops of the other liquids in a similar manner, at different locations on the substrate. The resulting spots can be of different sizes, by printing drops from different numbers of nozzles within each group. For example, it is possible to produce a row of spots X1 to X12 of the twelve liquids, at a selectable even spacing. The spots could be arranged in the same order as their groups of nozzles 15a to 151 within the printhead. Equally, a row of the twelve liquids in reverse order can be printed. Figure 1c illustrates the latter case. The first group of nozzles 15a prints a spot at position X1 in the manner described above. Subsequently, the second group of nozzles 15b prints a spot when it has moved to a position past the original spot, shown as X2. Subsequent spots X3 to X12 are printed in the same manner resulting in a row of twelve spots of different liquids.

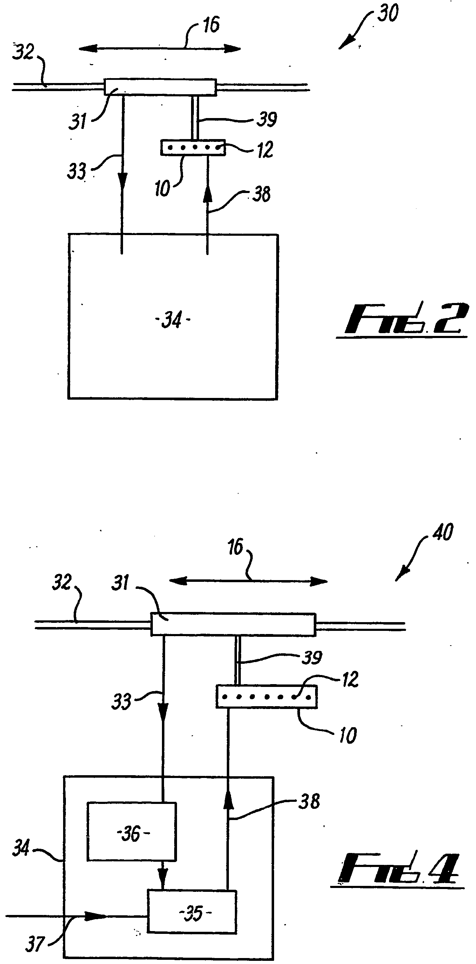

Figure 2 shows schematically the component parts of an example system that uses a conventional triggering scheme, generally depicted at 30. The system includes a processor 34, a printhead 10, and an encoder comprising an encoder readhead 31 and encoder tape 32.

The encoder readhead 31 is linked to the relative movement of the printhead and the substrate via mechanical connection 39. As the encoder readhead 31 travels along the encoder tape 32, a series of pulses are generated to the processor along path 33. The pulses correspond to equal intervals of motion, and thus each pulse corresponds to an exact position of the printhead in relation to the substrate.

Each pulse is transmitted to the printhead via printhead input line 38, and triggers the nozzles to print the desired pattern at the corresponding position. Typically, the printhead will have a limited data handling capacity, and therefore data must be loaded to the printhead at intervals. As an example, the printhead may only be able to handle two sets of pixels simultaneously. In this case, while one pixel is printed, the next pixel is loaded to the printhead in preparation for receipt of the next triggering pulse.

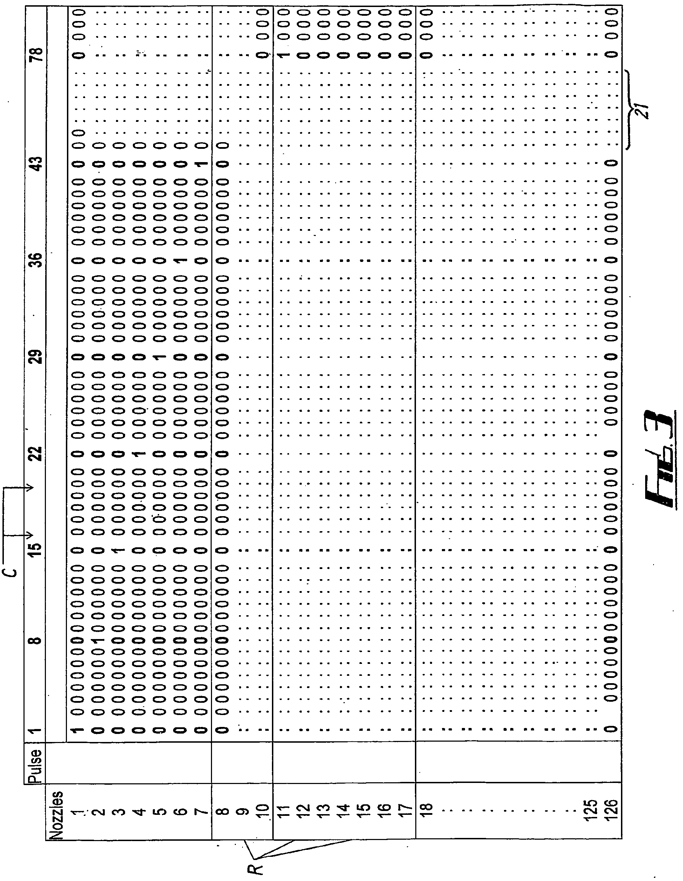

Figure 3 is a representation of an image for printing an array of spots of different liquids. The Figure shows an image for a printhead moving along an axis defined by the linear array of nozzles as shown in Figure 1. Figure 3 shows a matrix having 126 rows R, and a number of columns C. Each row R corresponds to a nozzle on the printhead. Each column of the matrix corresponds to a set of commands to the printhead, with a "1" representing a command to the nozzle to print, and a "0" representing a command to the nozzle to not print. A single column represents the print commands to be carried out at one particular position of the printhead over the substrate, triggered by the corresponding encoder pulse. Adjacent columns represent print commands at different times, when the printhead is positioned over different points of the substrate.

As the printhead progresses over the substrate, a series of encoder pulses are sent to the printhead and cause the printhead to print in accordance with the columns of data. This results in successive drops being printed on the substrate.

In the context of this example, a single column of the matrix can be considered as a pixel of data within the image; the pixel consists of data that corresponds to a print/not print command to each of the nozzles of the printhead, at each encoder pulse generated by the printer electronics.

In the example illustrated in Figure 3, the nozzle spacing is 137.14 µm, as in the case for the Xaarjet XJ126R, and the encoder pulses are 20 µm. Seven encoder pulses therefore correspond approximately to the nozzle spacing. For the superposition of drops from adjacent nozzles, as described with reference to Figures 1a to 1c, the nozzles will only be required to print on every seventh pulse. These "active pixels" are shown in Figure 3 in bold type, with all intermediate pixels being blank, that is, consisting entirely of non-print commands.

It becomes apparent from an examination of Figure 3 that the image for superposition of drops will contain a very large number of "blank pixels", each corresponding to a command to a print nozzle to not print at the particular locations intermediate between the nozzles. In addition, the image will contain a large number of blank pixels in the region 21, which corresponds to the time at which the second group of nozzles 15b (containing the second liquid) is travelling past the first printed spot X1. Although the printhead does not print drops when a blank pixel is received, the "non-print" commands must still be processed at the printhead. This takes time, and thus has an impact on the overall printing speed. In practice, the linear speed of the printhead is determined by the number of pixels (blank or otherwise) that the printhead is required to process. The printing speed is therefore inversely proportional to the encoder pulse spacing.

More significant problems occur when an encoder with extremely fine encoder pulses is used. A fine encoder is desirable to enable the drop superposition to be more accurate, and for multiple spots of different liquids to be positioned with high precision. An example of this approach is the use of a 1 µm encoder. Drop superposition and spot positioning would then be superior. However, the corresponding image for a 1 µm encoder would have 136 blank pixels between each active pixel. This would place unacceptable demands on the printer electronics and reduce printing speeds to impractical levels.

Figure 4 shows schematically the component parts of an example embodiment of the invention in one of its aspects, generally depicted at 40. The system is similar to that shown in Figure 2, with similar parts being referred to by the same reference numerals. However, the processing unit 34 includes additional apparatus in order to obviate the above-described problems.

The processing unit includes a suppression module 36 which receives the regular encoder pulse stream 33 from the encoder readhead 31. The suppression module 36 is connected to the printhead 10 via image store 35, into which the image file has been loaded previously, and printhead input line 38. The processing unit in this example is an FPGA chip, although other suitable electronics may be used.

The suppression module includes a counter, adapted to prevent the transmission of some, but not all, of the encoder pulses to the printhead. In particular, the suppression module is programmed to suppress all encoder pulses corresponding to the blank pixels that would occur in the spaces between the nozzles. In doing so, the apparatus avoids the requirement for the printhead to process print/non-print data at each encoder pulse.

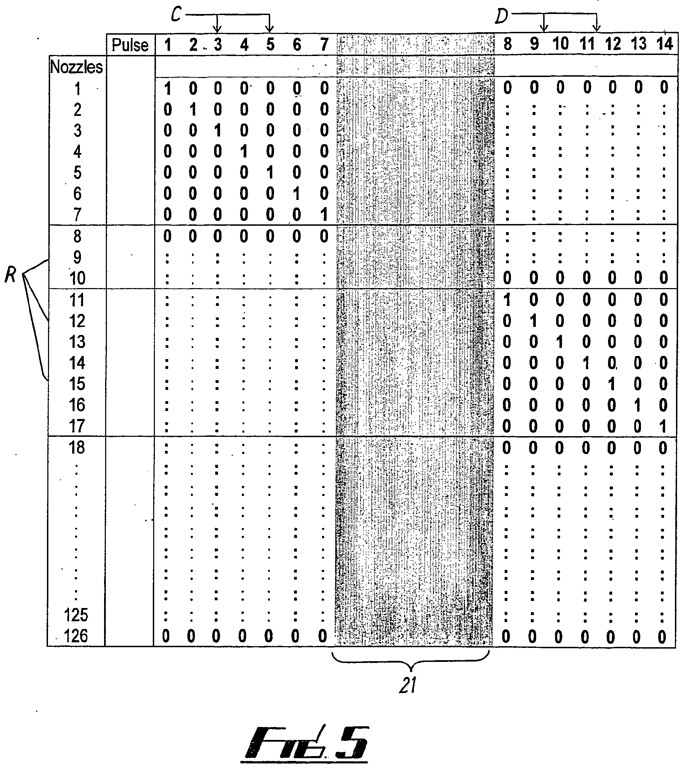

Figure 5 shows an image representative of the image seen by the printhead in accordance with the present invention. As in Figure 3, the matrix has a number of columns C representing pixels of print data, and a number of rows R corresponding to nozzles on the printhead. In Figure 5, intermediate blank pixels do not form part of the image as seen by the printhead, because the corresponding encoder pulses are suppressed. Put another way, there are no pixels associated with the printhead positions and corresponding encoder pulses between the nozzle spacings. That is, there is no data in the gaps D between the active pixels.

In addition, it should be noted that there is no image data corresponding to the delay 21 shown in Figure 5. The pixels corresponding to pulses 7 and 8 are consecutive pixels, separated in space by the delay 21 caused by suppressing a number of encoder pulses from reaching the printhead.

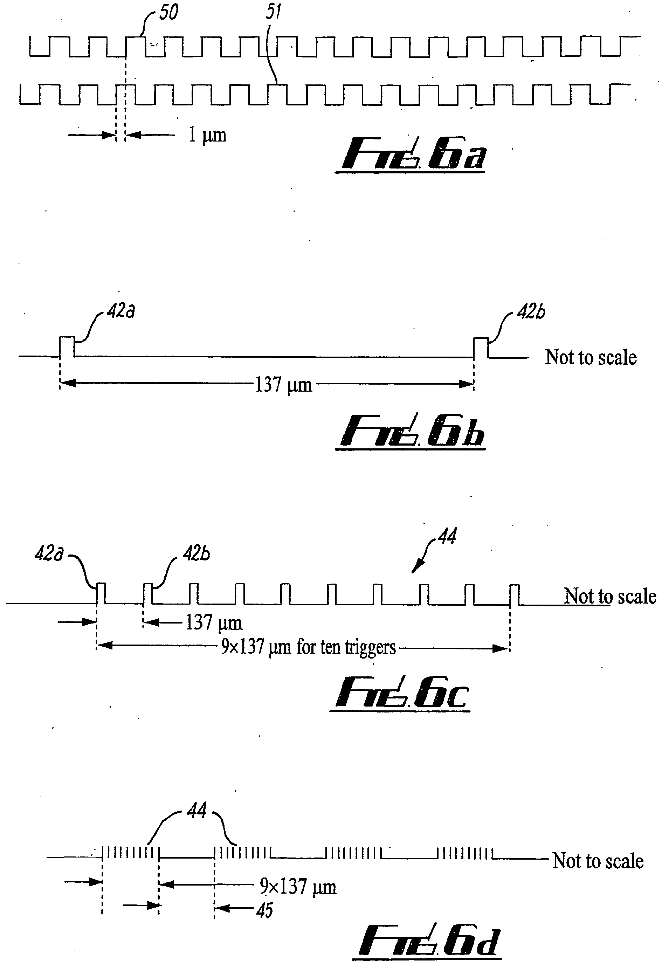

Figures 6a to 6d show examples of how the encoder pulses may be suppressed by the electronics.

Figure 6a shows the raw encoder pulse signal 50 and quadrature 51. The raw encoder pulse is a square pulse with pulse period of 4 µm, used with quadrature to obtain an encoder pulse of 1 µm. Figure 6a is representative of the signal received by the processing unit 34 from the encoder readhead 31 via a connection 33 in Figures 2 and 4.

In the conventional approach, this signal would also be output from the processing unit 34 to the printhead 10 via printhead input line 38 in Figure 2. This would severely hamper the printing speed of the device. However, suppression module 36, shown in Figure 4, does not allow every encoder pulse to pass through to the printhead 10. The suppression module 36 includes a counter which counts the raw encoder pulses and allows output of an encoder pulse after a pre-determined number of input pulses. Figure 6b shows the signal transmitted to printhead 10 via printhead input line 38. The suppression module only allows through every 137^{th} pulse, a distance that corresponds to the spacing S between nozzles of the Xaarjet XJ126R printhead used.

The initial pulse 42a effects triggering of the printhead in accordance with the first pixel of data. In this example, the first pixel of data causes the first nozzle N1 to print a drop of liquid on the substrate.

The second pulse 42b causes triggering of the printer in accordance with the next active pixel of data. In the example described, the second pixel data causes the second nozzle N2 to print a drop of liquid after the printhead has travelled 137 µm, and therefore a second drop is superposed on the first printed drop.

Figure 6c shows the encoder signal from the suppression unit to the printhead 10 on a larger scale. The Figure shows a series of ten pulses, generally depicted at 44, each pulse separated by a 137 µm interval. The ten pulses cause ten triggering events at the printhead at 137 µm intervals. In the example shown seven of these triggers cause superposition of seven drops of liquid onto the same spot X1, with the remaining three triggers corresponding to the three unused nozzles between groups of nozzles 15a and 15b. Because the nozzles are unused, the corresponding pixels for these nozzles are always blank.

Figure 6d shows the encoder signal from the suppression unit to the printhead on a yet larger scale. The figure shows a series of bursts of ten triggers, with the first burst corresponding to the superposition of drops onto a single spot X1. Each burst of triggers is separated by gap 45 which represents the distance that the printhead must travel before the second group of nozzles is in position to print drops of the second liquid at an adjacent spot X2.

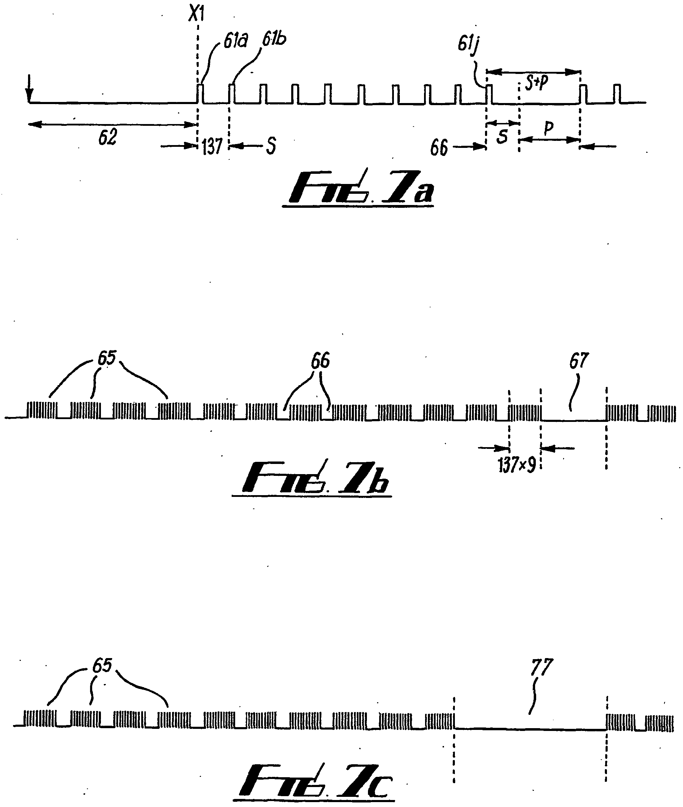

Figures 7a and 7b show an example of how the suppression of the pulses relates to spaces between printing positions. Figure 7a shows a number of encoder pulses 61 transmitted to the printhead 10. The first pulse, 61a occurs after an initial offset 62 which allows alignment of the first nozzle N1 with the first position to be printed X1. Successive pulses 61b to 61j occur when successive nozzles are aligned with position X1. As explained above, encoder pulses intermediate to successive pulses are suppressed from reaching the printhead. The electronics suppress 136 encoder pulses to account for the nozzle pitch S of approximately 137 µm. This spacing is illustrated by space S on Figure 7a.

When ten pulses have been received at the printhead, nozzle N10 is aligned at position X1. The first nozzle N11 of the second group 15b will not be required to print a drop of the second liquid until the printhead has moved so as to bring nozzle N11 to position X2. The electronics initially suppress 136 encoder pulses corresponding to nozzle N11 coming into alignment with position X1. Thereafter, a further suppression of pulses accounts for the space required between drops of successive liquids. This interliquid separation is shown in the Figure as P, and the distance S+P can be referred to as the interliquid offset 66.

Although the distance S, and thus the inter-nozzle suppression is determined by the nozzle pitch, the distance P is a free choice. Indeed, the electronics can be configured to suppress any integer number of encoder pulses. This allows the spot separation to be determined by the programmer, and ultimately by the customer requesting the microarray. When the encoder used has a 1 µm pulse, the spacing between drops can be selected within 1 µm. This provides a highly configurable and flexible system.

Furthermore, the encoder pulse suppression can be used to provide an even more precisely located array by correcting any accumulated errors. For example, when using the Xaarjet XJ126R printhead, the printhead would accumulate a series of 0.14 µm errors. These errors can be accounted for by a carefully chosen interliquid offset.

Figure 7b shows a series of bursts of triggers on a larger scale. Each burst of triggers 65 corresponds to triggering events to a group of nozzles. Intermediate spaces 66 are the interliquid offsets previously described with reference to Figure 6d and Figure 7a.

When the printhead has printed a 1x12 array of spots of the twelve liquids on one slide, the pattern will be typically repeated immediately afterwards, a little further along the slide. The liquids may be printed in the same order as before, so that two (or more) adjacent patterns are formed on a single slide. The gap 67 between the repeated patterns need not be the same as the interliquid offset 66. For example, the customer may desire a larger separation between repeated patterns.

This gap 67 may be referred to as the inter-repeat offset. During the inter-repeat offset, the encoder pulses can be suppressed while the printhead reaches correct position to print the repeated pattern.

When the printhead has printed a series of repeated patterns on one slide, the patterns will typically be repeated on second (and further) slides. An interslide offset is thus required for alignment of the printhead with the second slide.

The interslide offset is shown as space 77 on Figure 7c. During the interslide offset, the encoder pulses are suppressed while the printhead travels over the space between two adjacent slides, and sufficiently into the second slide to provide the required border around the edge of the slide.

It will be appreciated that the interliquid, inter-repeat interslide offsets are each produced by varying the distance P for which the pulses are suppressed. In addition, the offsets can be varied independently of one another depending on the requirements of the customer.

The present invention can be used to suppress pulses to provide various offsets required for printing microarrays. In particular, the printhead will often be used for multiple passes over a set of slides, repeating the same patterns of spots at different locations. The electronics is configured to suppress pulses to the printhead at these "inter-pass" spaces required for alignment of the printhead for a subsequent pass.

The examples described above relate to the superposition of seven drops of each liquid onto each spot. However, the present invention is flexible with regard to the number of drops printed on each spot.

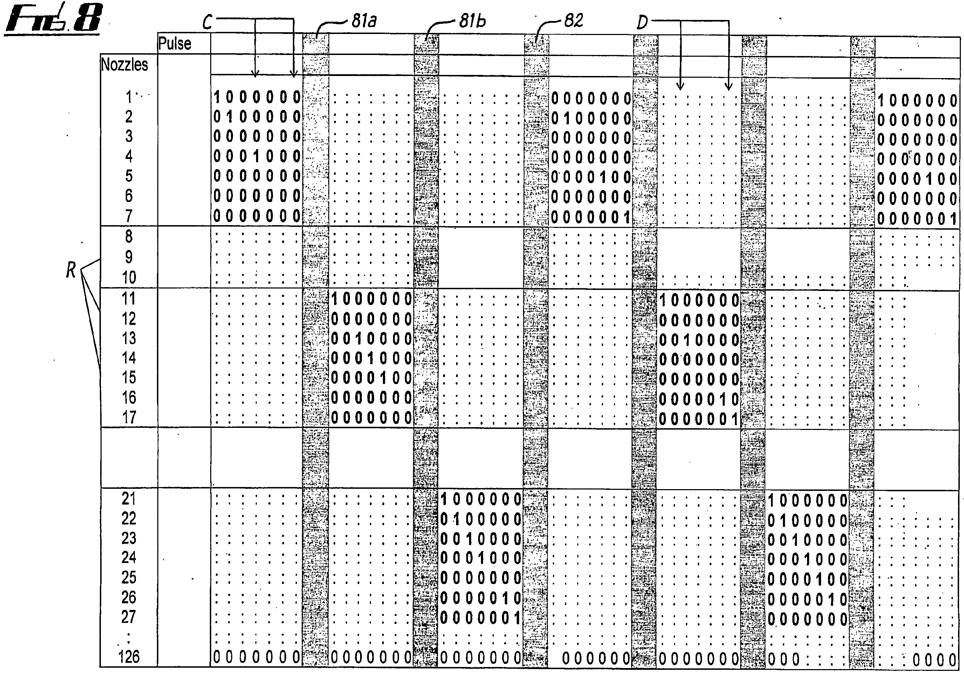

Figure 8 is a representation of an image used in accordance with an embodiment of the invention. The Figure shows groups of nozzles whose chambers contain the same liquid, each group being used to superpose on the substrate a variable number of drops.

In Figure 8, nozzles N1 and N2 are used to print drops of liquid 1. The triggers occur at an interval of 137 µm, with intermediate encoder pulses suppressed from reaching the print head. The drop from nozzle N2 is thus superposed on the drop from nozzle N1.

At a further interval of 137 µm, nozzle N3 is aligned with the position X1 at which the first two drops were printed. However, nozzle N3 is not commanded to print, as demonstrated by the zero in the appropriate row.

After a further 137 µm interval, a drop is printed from nozzle N4. Subsequently, as the print head moves further over position X1, nozzles N5 to N7 receive triggers, but these triggers issue a non-print command.

The first seven columns therefore cause a spot to be printed at position X1 consisting of three drops of liquid. The number of drops printed has a direct effect on the size of the printed spots. By controlling the number of drops printed, the user can control the size of the spot on the microarray.

Subsequently, following the inter liquid offset shown by the shaded region 81a, the second group of nozzles, nozzles N11 to N17, is triggered by the burst of pulses allowed through to the printhead. It should be noted that the shaded region 81a does not correspond to data received by the printhead, but rather to a delay in which encoder pulses are suppressed. However, as shown in the Figure, only nozzles N11, N13, N14 and N15 are asked to print the drops, with nozzles N15 to N17 receiving non-print commands. The second group of nozzles therefore prints a spot consisting of four drops of the second liquid.

Following the second interliquid offset shown by shaded region 81b, the third group of nozzles prints six drops of the third liquid, with nozzle N25 not being commanded to print. As above, shaded region 81b corresponds to a delay in which encoder pulses are suppressed.

In this way, the electronics can be configured to print spots of different liquids of variable sizes. In addition, if required, the interliquid offset can be adjusted to within one raw encoder pulse (in this example 1 micron) to provide different spacings for different sized spots. For example, larger spots may require a lengthened interliquid offset.

Figure 8 also shows the printing of a repeated pattern of spots. This may be for example printing of the pattern of spots in a repeated pattern, and thus shaded region 82 represents an inter-repeat offset. As before, three out of the seven nozzles in the first group are printed from, resulting in a spot consisting of three drops. The second group of nozzles print a spot of four drops, and the third group of nozzles prints a spot of six drops.

Of significance is the fact that the nozzles used in the creation of the first and second spots of liquid need not be the same. For example, nozzles N1, N2 and N4 are used for printing the first spot of liquid one whereas nozzles N2, N5 and N7 are used for printing the second spot. In addition, the first spot of liquid two is printed from nozzles 11, 13, 14 and 15, whereas the second spot of that liquid is printed from nozzles N11, N13, N16 and N17.

It will be appreciated that similar cycling of the subsets of nozzles used can be carried out over further repeated patterns of spots on the same slide or subsequent slides.

This cycling of nozzle use offers a number of advantages as follows.

The cycling of the nozzles allows the workload to be shared. By using the nozzles equally, and using an approximately equal volume of liquid from each nozzle, the printhead is able to print an increased number of drops before reloading is required. In addition, since the reloading operation typically requires replacement of all the liquid in a group of nozzles, even usage of the liquids reduces the quantity of liquid wasted. Furthermore, cycling of the subsets of nozzles used places an even distribution of stress on the nozzles, and over many cycles the wear on the nozzles can be expected to be the same. This is likely to improve the working lifetime of the printhead.

A further advantage is that should any nozzles of the printhead become broken or temporarily disabled (eg blocked), the workload of the nozzles can be cycled such that the broken nozzles are avoided. In the example shown by Figure 8, the use of nozzles N3 and N6 is avoided for all repeats.

Typically, a customer would be given a choice of drop size of one to five drops of liquid, which would allow the workload to be shared across the seven nozzles. If any nozzles became blocked, the surplus of two nozzles would enable the printhead to deliver the number of drops required by avoiding use of use of the blocked nozzles.

The examples described above relate to a printhead with a linear array of nozzles. The spacings and dimensions used in the examples are those that apply to the XaarJet XJ126R printhead. However, the examples relate to a single cycle printhead of the sake of simplicity. That is, the printhead has been treated as if it is possible to trigger all of the nozzles of the printhead simultaneously.

However, this is not how the XaarJet XJ126R operates; two adjacent nozzles cannot be triggered simultaneously. This arises because printhead shares walls between adjacent chambers, and it is the displacement of these walls which produces ejection of drops.

Instead the nozzles are labelled ABCABC etc, and the triggering takes place in three cycles A, B, and C. The A cycle triggers the all of the 'A' nozzles with a print command or a non-print command. The B cycle triggers all of the 'B' nozzles, and finally the C cycle triggers all of the 'C' nozzles. During the A cycle, the B and C nozzles cannot be printed, and vice-versa.

In one mode of operation, favourable for the triggering scheme of the present embodiment, a separate trigger is used at the printhead for each of the cycles.

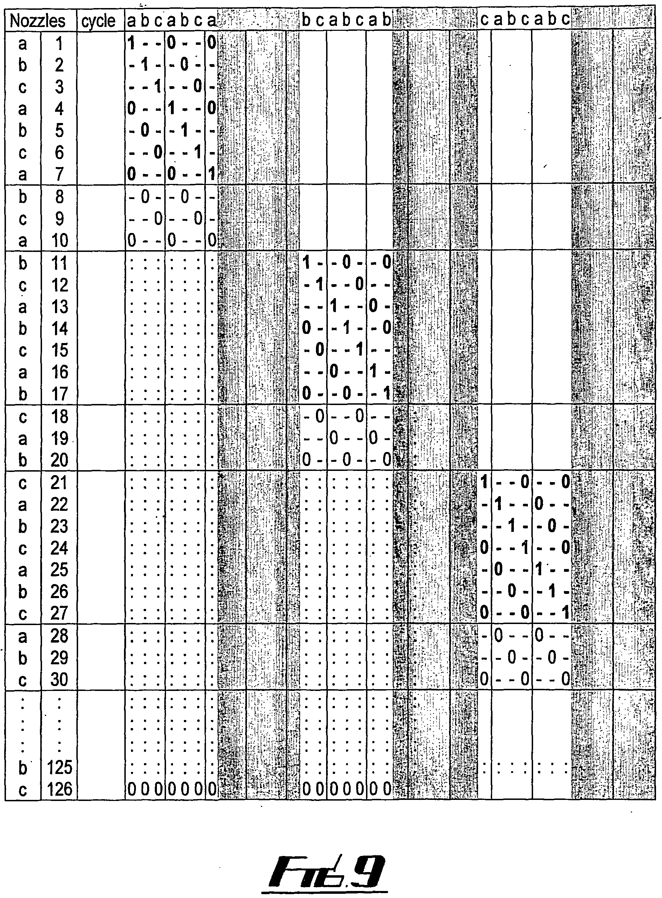

Figure 9 shows an example image for the three-cycle triggering system. As before, each column of the matrix corresponds to a set of commands to the printhead, with a "1" representing a command to the nozzle to print, and a "0" representing a command to the nozzle to not print. A single column represents one particular cycle of print commands to be carried out at one particular position of the printhead over the substrate. Each column of data is triggered by a corresponding encoder pulse. As before, encoder pulses between the pixels are suppressed from reaching the printhead.

The first column shows the first A cycle triggering nozzle N1 to print. Nozzles N4 and N7 are also on the A cycle, and thus are triggered. However, N4 and N7 are not commanded to print. As explained above, the B and C nozzles are not triggered. Nozzle N1 prints a drop at position X1 on the substrate.

It should be noted that on the A cycle, all of the A nozzles (e.g. N13, N16, N19) are triggered. However, in the simple example of Figure 9, all of the remaining A nozzles receive non-print commands.

The B cycle triggers nozzles N2 and N5 (although only N2 prints). The B-cycle occurs with the subsequent encoder pulse allowed through to the printhead. This occurs when the nozzle N2 is aligned with printing position X1. Nozzle N2 therefore superposes a drop of liquid onto the first printed spot X1. On the first C cycle, represented by the third column of the table, the nozzle N3 is aligned with X1. The C cycle triggers nozzle N3 to print, and nozzle N6 not to print.

The first three printing cycles have completed, rendering a single command to each of the nozzles in the group. The three-column block can be considered as a single "pixel", equivalent to a single column of the images shown in Figures 3 or 5. The present embodiment utilises the time shifting of the cycles necessary for the XaarJet printhead to superpose a drop onto a spot at each cycle.

The next A cycle triggers N4 to print at position X1. The cycles continue, until N7 is triggered to print at position X1. The first group of nozzles have superposed seven drops onto the position X1.

It will be appreciated that the principles outlined above in relation to the single-cycle printhead can also be applied to the 3-cycle Xaarjet case. In particular, it should be noted that the suppression of encoder pulses from reaching the printhead, as described above may be used. This is true of the inter-nozzle suppression, and the suppression that occurs at the interliquid offset, the interslide offset, and the inter-repeat offsets.

The present invention applies equally to the Xaarjet printhead used in two-cycle mode, that is with nozzles labelled ABABAB, triggered by A and B cycles.

Several modifications to the above described embodiments are envisaged. In particular, the simple examples used for the purposes of explanation would in practice be developed to print complex patterns from the printhead. For example, microarrays would be printed on many slides, and could comprise many repeats of the same spot patterns. It is possible for many nozzles within different groups to print different liquids simultaneously at different points on the substrate. Such patterns will however need to account for constraints caused by the particular nozzle pitch on the printhead.

The present invention in its various aspects provides numerous advantages.

Firstly, the invention provides an improved method of superposing drops onto a substrate. The parallel orientation allows drops of liquid to be printed on to a single spot from different nozzles of the printhead. This provides an efficient and flexible printing process, and allows printing of spots of variable size.

The parallel orientation is also useful in that use of broken nozzles, or those temporarily disabled, can be avoided during printing by using others within each group instead. Furthermore, when the number of drops to be printed on a spot is less than the number of functioning nozzles in the corresponding group of nozzles, different subsets of the functioning nozzles can be used to print onto adjacent slides.

The present invention reduces the quantity of liquid wasted, and allows a larger number of drops to be printed before reloading the liquid is required. This results in a more efficient printing process.

The suppression scheme reduces the amount of data sent to the printhead, thereby improving printing speed. The reduced amount of data results in a lower susceptibility to data errors.

## Claims

1. Apparatus for triggering a printhead and positioning spots of liquid, for example biological samples, on a substrate, comprising a printhead (10) having a linear array of nozzles (12), oriented in an axis (6), the apparatus further comprising:
- a processing module (34) controlling the transfer of printing triggers to the printhead (10);
- an encoder module (31) adapted to provide a series of pulses to the processing module (34), the pulses corresponding to locations of the printhead (10) along the axis;
- wherein the processing module (34) receives pulses from the encoder module (31) at intervals representative of a fixed unit of spatial displacement of the printhead (10) along said axis (16) and wherein the axis (16) is substantially parallel to the direction of printing and the nozzles (12) are of substantially equal pitch, **characterised in that** the processing module (34) transfers printing triggers to the printhead (10)at one or more print intervals, each print interval being representative of a plurality of said fixed units of spatial displacement of the printhead, said print intervals corresponding to the required separation of the printed drops.

2. Apparatus as claimed in Claim 1 wherein the processing module (34) transfers printing triggers to the printhead (10) at a plurality of print intervals.

3. Apparatus as claimed in Claim 2 wherein the processing module (34) transfers printing triggers to the printhead (10) at a plurality of different print intervals.

4. Apparatus as claimed in Claim 1 or Claim 2 wherein the print intervals are selectable.

5. Apparatus as claimed in any of Claims 1 to 4 wherein the fixed unit of spatial displacement of the printhead (10) is less than 20µm.

6. Apparatus as claimed in Claim 5 wherein the fixed unit of spatial displacement of the printhead (10) is less than 5µm.

7. Apparatus as claimed in Claim 6 wherein the fixed unit of spatial displacement of the printhead (10) is 1µm.

8. Apparatus as claimed in any of Claims 1 to 7 wherein the print intervals are selectable to within the fixed unit of spatial displacement.

9. A method of triggering a printhead (10) and positioning spots of liquid, for example biological samples, on a substrate, the printhead (10) having a linear array of nozzles (12) of substantially equal pitch oriented in an axis substantially parallel to the direction of printing, the method comprising the steps of:
- transmitting a series of pulses from an encoder module (31) to a processing module (34), the pulses corresponding to locations of the printhead (10), wherein the processing module (34) receives pulses from the encoder module (31) at intervals representative of a fixed unit of spatial displacement of the printhead (10);
- transferring printing triggers from the processing module (34) to the printhead (10) at print intervals representative of a plurality of said fixed units of spatial displacement of the printhead (10) said print intervals corresponding to the required separation of the printed drops.

10. The method as claimed in Claim 9 wherein the processing module (34) transfers printing triggers to the printhead (10) at a plurality of print intervals.

11. The method as claimed in Claim 9 wherein the processing module (34) transfers printing triggers to the printhead (10) at a plurality of different print intervals.

12. The method as claimed in Claim 10 or Claim 11 wherein the print intervals are selectable.

13. The method as claimed in any of Claims 9 to 12 wherein the fixed unit of spatial displacement of the printhead (10) is less than 20 µm.

14. The method as claimed in Claim 13 wherein the fixed unit of spatial displacement of the printhead (10) is less than 5 µm.

15. The method as claimed in Claim 14 wherein the fixed unit of spatial displacement of the printhead (10) is 1 µm.

16. The method as claimed in any of Claims 9 to 15 wherein the print intervals are selectable to within the fixed unit of spatial displacement.

17. The method as claimed in any of Claims 9 to 16 wherein the method includes the step of printing drops of liquid on a substrate in response to data received by the printhead (10).

18. The method as claimed in Claim 17 wherein the method includes the steps of printing an array of spots.

19. The method as claimed in any of Claims 9 to 18 wherein the nozzles (12) of the printhead (10) are arranged in groups (15a, 15b, 15c), each group comprising a plurality of nozzles (12), and each group corresponding to a particular liquid.

20. The method as claimed in Claim 19 wherein the nozzles (12) in each group (15a, 15b, 15c) are contiguous.

21. The method as claimed in any of Claims 9 to 20 comprising the additional step of: - transferring printing triggers to the printhead (10) at a series of print intervals corresponding to the spatial separation of the printhead nozzles (12).

22. The method as claimed in any of Claims 9 to 21 comprising the additional steps of:-transferring printing triggers to the printhead (10) to at a print interval corresponding to the required spatial displacement of the array of spots and a second, repeated array of spots.

23. The method as claimed in any of Claims 9 to 22 comprising the additional steps of:
- transferring printing triggers to the printhead (10) at a print interval corresponding to the required spatial displacement of the substrate and transferring printing triggers to a second substrate;
- printing drops on the second substrate.

24. The method as claimed in any of Claims 9 to 23 comprising the additional step of:
- transferring print data to the printhead (10) at said print intervals.

25. A method of printing on a substrate comprising the steps of:
- triggering a printhead (10) by the method of any of Claims 9 to 24 ;
- displacing the printhead (10) relative to the substrate along a first axis, the printhead having a linear array of nozzles (12) oriented in the axis,
- superposing drops of a first liquid at a first location on the substrate, wherein at least two drops of the first liquid are printed from distinct nozzles (12).

26. A method of printing on a substrate comprising the steps of:
- triggering a printhead (10) by the method of any of Claims 9 to 24;
- printing a first drop of a first liquid from a first nozzle (12) of the printhead (10) at a first location; displacing the printhead (10) relative to the substrate along the axis (16) such that the position of a second nozzle (12) of the printhead (10) corresponds to the first location ;
- printing a second drop of the first liquid from the second nozzle (12) of the printhead (10) at the first location.

## Patentansprüche

1. Eine Vorrichtung zum Auslösen eines Druckerkopfs und Positionieren von Punkten von Flüssigkeit, zum Beispiel biologischen Proben, auf einem Substrat, die einen Druckerkopf (10) mit einer linearen Anordnung von Düsen (12), ausgerichtet in einer Achse (6), beinhaltet, wobei die Vorrichtung ferner Folgendes beinhaltet:
- ein Verarbeitungsmodul (34), das die Übermittlung von Druckauslösern an den Druckerkopf (10) steuert;
- ein Codiermodul (31), das angepasst ist, um dem Verarbeitungsmodul (34) eine Folge von Impulsen bereitzustellen, wobei die Impulse Stellen des Druckerkopfs (10) entlang der Achse entsprechen;
- wobei das Verarbeitungsmodul (34) in Intervallen, die repräsentativ für eine feste Einheit räumlicher Verschiebung des Druckerkopfs (10) entlang der Achse (16) sind, Impulse von dem Codiermodul (31) empfängt, und wobei die Achse (16) im Wesentlichen parallel zu der Druckrichtung ist und die Düsen (12) im Wesentlichen gleiche Abstände aufweisen, **dadurch gekennzeichnet, dass** das Verarbeitungsmodul (34) in einem oder mehreren Druckintervallen Druckauslöser an den Druckerkopf (10) übermittelt, wobei jedes Druckintervall repräsentativ für eine Vielzahl der festen Einheiten räumlicher Verschiebung des Druckerkopfs ist, wobei die Druckintervalle der erforderlichen Trennung der gedruckten Tropfen entsprechen.

2. Vorrichtung gemäß Anspruch 1, wobei das Verarbeitungsmodul (34) in einer Vielzahl von Druckintervallen Druckauslöser an den Druckerkopf (10) übermittelt.

3. Vorrichtung gemäß Anspruch 2, wobei das Verarbeitungsmodul (34) in einer Vielzahl von unterschiedlichen Druckintervallen Druckauslöser an den Druckerkopf (10) übermittelt.

4. Vorrichtung gemäß Anspruch 1 oder Anspruch 2, wobei die Druckintervalle ausgewählt werden können.

5. Vorrichtung gemäß einem der Ansprüche 1 bis 4, wobei die feste Einheit räumlicher Verschiebung des Druckerkopfs (10) kleiner als 20 µm ist.

6. Vorrichtung gemäß Anspruch 5, wobei die feste Einheit räumlicher Verschiebung des Druckerkopfs (10) kleiner als 5 µm ist.

7. Vorrichtung gemäß Anspruch 6, wobei die feste Einheit räumlicher Verschiebung des Druckerkopfs (10) 1 µm ist.

8. Vorrichtung gemäß einem der Ansprüche 1 bis 7, wobei die Druckintervalle innerhalb der festen Einheit räumlicher Verschiebung ausgewählt werden können.

9. Ein Verfahren zum Auslösen eines Druckerkopfs (10) und Positionieren von Punkten von Flüssigkeit, zum Beispiel biologischen Proben, auf einem Substrat, wobei der Druckerkopf (10) eine lineare Anordnung von Düsen (12) von im Wesentlichen gleicher Neigung, ausgerichtet in einer Achse, die im Wesentlichen parallel zu der Druckrichtung ist, aufweist, wobei das Verfahren die folgenden Schritte beinhaltet:
- Übertragen einer Folge von Impulsen von einem Codiermodul (31) an ein Verarbeitungsmodul (34), wobei die Impulse Stellen des Druckerkopfs (10) entsprechen, wobei das Verarbeitungsmodul (34) in Abständen, die repräsentativ für eine feste Einheit räumlicher Verschiebung des Druckerkopfs (10) sind, Impulse von dem Codiermodul (31) empfängt;
- Übermitteln von Druckauslösern von dem Verarbeitungsmodul (34) an den Druckerkopf (10) in Druckintervallen, die repräsentativ für eine Vielzahl von festen Einheiten räumlicher Verschiebung des Druckerkopfs (10) sind, wobei die Druckintervalle der erforderlichen Trennung der gedruckten Tropfen entsprechen.

10. Verfahren gemäß Anspruch 9, wobei das Verarbeitungsmodul (34) in einer Vielzahl von Druckintervallen Druckauslöser an den Druckerkopf (10) übermittelt.

11. Verfahren gemäß Anspruch 9, wobei das Verarbeitungsmodul (34) in einer Vielzahl von unterschiedlichen Druckintervallen Druckauslöser an den Druckerkopf (10) übermittelt.

12. Verfahren gemäß Anspruch 10 oder Anspruch 11, wobei die Druckintervalle ausgewählt werden können.

13. Verfahren gemäß einem der Ansprüche 9 bis 12, wobei die feste Einheit räumlicher Verschiebung des Druckerkopfs (10) kleiner als 20 µm ist.

14. Verfahren gemäß Anspruch 13, wobei die feste Einheit räumlicher Verschiebung des Druckerkopfs (10) kleiner als 5 µm ist.

15. Verfahren gemäß Anspruch 14, wobei die feste Einheit räumlicher Verschiebung des Druckerkopfs (10) 1 µm ist.

16. Vorrichtung gemäß einem der Ansprüche 9 bis 15, wobei die Druckintervalle innerhalb der festen Einheit räumlicher Verschiebung ausgewählt werden können.

17. Verfahren gemäß einem der Ansprüche 9 bis 16, wobei das Verfahren den Schritt des Druckens von Tropfen von Flüssigkeit auf ein Substrat als Reaktion auf von dem Druckerkopf (10) empfangene Daten umfasst.

18. Verfahren gemäß Anspruch 17, wobei das Verfahren die Schritte des Druckens einer Anordnung von Punkten umfasst.

19. Verfahren gemäß einem der Ansprüche 9 bis 18, wobei die Düsen (12) des Druckerkopfs (10) in Gruppen (15a, 15b, 15c) angeordnet sind, wobei jede Gruppe eine Vielzahl von Düsen (12) beinhaltet und jede Gruppe einer bestimmten Flüssigkeit entspricht.

20. Verfahren gemäß Anspruch 19, wobei die Düsen (12) in jeder Gruppe (15a, 15b, 15c) nebeneinander liegen.

21. Verfahren gemäß einem der Ansprüche 9 bis 20, das den folgenden zusätzlichen Schritt beinhaltet: Übermitteln von Druckauslösern an den Druckerkopf (10) in einer Folge von Druckintervallen, die der räumlichen Trennung der Druckerkopfdüsen (12) entsprechen.

22. Verfahren gemäß einem der Ansprüche 9 bis 21, das die folgenden zusätzlichen Schritte beinhaltet: Übermitteln von Druckauslösern an den Druckerkopf (10) in einem Druckintervall, das der erforderlichen räumlichen Verschiebung der Anordnung von Punkten und einer zweiten, wiederholten Anordnung von Punkten entspricht.

23. Verfahren gemäß einem der Ansprüche 9 bis 22, das die folgenden zusätzlichen Schritte beinhaltet:
- Übermitteln von Druckauslösern an den Druckerkopf (10) in einem Druckintervall, das der erforderlichen räumlichen Verschiebung des Substrats entspricht, und Übermitteln von Druckauslösern an ein zweites Substrat;
- Drucken von Tropfen auf das zweite Substrat.

24. Verfahren gemäß einem der Ansprüche 9 bis 23, das den folgenden zusätzlichen Schritt beinhaltet:
- Übermitteln von Druckdaten an den Druckerkopf (10) in den Druckintervallen.

25. Ein Verfahren zum Drucken auf ein Substrat, das die folgenden Schritte beinhaltet:
- Auslösen eines Druckerkopfs (10) durch das Verfahren gemäß einem der Ansprüche 9 bis 24;
- Verschieben des Druckerkopfs (10) relativ zu dem Substrat entlang einer ersten Achse, wobei der Druckerkopf eine lineare Anordnung von Düsen (12), ausgerichtet in der Achse, aufweist,
- Überlagern von Tropfen einer ersten Flüssigkeit an einer ersten Stelle auf dem Substrat, wobei mindestens zwei Tropfen der ersten Flüssigkeit aus verschiedenen Düsen (12) gedruckt werden.

26. Ein Verfahren zum Drucken auf ein Substrat, das die folgenden Schritte beinhaltet:
- Auslösen eines Druckerkopfs (10) durch das Verfahren gemäß einem der Ansprüche 9 bis 24;
- Drucken eines ersten Tropfens einer ersten Flüssigkeit aus einer ersten Düse (12) des Druckerkopfs (10) an einer ersten Stelle; Verschieben des Druckerkopfs (10) relativ zu dem Substrat entlang der Achse (16), so dass die Position einer zweiten Düse (12) des Druckerkopfs (10) der ersten Stelle entspricht;
- Drucken eines zweiten Tropfens der ersten Flüssigkeit aus der zweiten Düse (12) des Druckerkopfs (10) an der ersten Stelle.

## Revendications

1. Appareil pour déclencher une tête d'impression et positionner des taches de liquide, par exemple des échantillons biologiques, sur un substrat, comprenant une tête d'impression (10) ayant un ensemble linéaire de buses (12), orientées dans un axe (6), l'appareil comprenant en outre :
- un module de traitement (34) contrôlant le transfert de déclencheurs d'impression à la tête d'impression (10) ;
- un module codeur (31) conçu pour fournir une série d'impulsions au module de traitement (34), les impulsions correspondant à des emplacements de la tête d'impression (10) le long de l'axe ;
- dans lequel le module de traitement (34) reçoit des impulsions du module codeur (31) à des intervalles représentatifs d'une unité fixe de déplacement spatial de la tête d'impression (10) le long dudit axe (16) et dans lequel l'axe (16) est substantiellement parallèle à la direction d'impression et les buses (12) sont d'un écartement substantiellement égal, **caractérisé en ce que** le module de traitement (34) transfère des déclencheurs d'impression à la tête d'impression (10) à un ou plusieurs intervalles d'impression, chaque intervalle d'impression étant représentatif d'une pluralité desdites unités fixes de déplacement spatial de la tête d'impression, lesdits intervalles d'impression correspondant à la séparation nécessaire des gouttes imprimées.

2. Appareil tel que revendiqué dans la revendication 1 dans lequel le module de traitement (34) transfère des déclencheurs d'impression à la tête d'impression (10) à une pluralité d'intervalles d'impression.

3. Appareil tel que revendiqué dans la revendication 2 dans lequel le module de traitement (34) transfère des déclencheurs d'impression à la tête d'impression (10) à une pluralité d'intervalles d'impression différents.

4. Appareil tel que revendiqué dans la revendication 1 ou la revendication 2 dans lequel les intervalles d'impression sont sélectionnables.

5. Appareil tel que revendiqué dans n'importe lesquelles des revendications 1 à 4 dans lequel l'unité fixe de déplacement spatial de la tête d'impression (10) est inférieure à 20 µm.

6. Appareil tel que revendiqué dans la revendication 5 dans lequel l'unité fixe de déplacement spatial de la tête d'impression (10) est inférieure à 5 µm.

7. Appareil tel que revendiqué dans la revendication 6 dans lequel l'unité fixe de déplacement spatial de la tête d'impression (10) est de 1 µm.

8. Appareil tel que revendiqué dans n'importe lesquelles des revendications 1 à 7 dans lequel les intervalles d'impression sont sélectionnables dans les limites de l'unité fixe de déplacement spatial.

9. Une méthode de déclenchement d'une tête d'impression (10) et de positionnement de taches de liquide, par exemple des échantillons biologiques, sur un substrat, la tête d'impression (10) ayant un ensemble linéaire de buses (12) d'écartement substantiellement égal orientées dans un axe substantiellement parallèle à la direction d'impression, la méthode comprenant les étapes consistant à :
- transmettre une série d'impulsions d'un module codeur (31) à un module de traitement (34), les impulsions correspondant à des emplacements de la tête d'impression (10), dans laquelle le module de traitement (34) reçoit des impulsions du module codeur (31) à des intervalles représentatifs d'une unité fixe de déplacement spatial de la tête d'impression (10) ;
- transférer des déclencheurs d'impression du module de traitement (34) à la tête d'impression (10) à des intervalles d'impression représentatifs d'une pluralité desdites unités fixes de déplacement spatial de la tête d'impression (10), lesdits intervalles d'impression correspondant à la séparation nécessaire des gouttes imprimées.

10. La méthode telle que revendiquée dans la revendication 9 dans laquelle le module de traitement (34) transfère des déclencheurs d'impression à la tête d'impression (10) à une pluralité d'intervalles d'impression.

11. La méthode telle que revendiquée dans la revendication 9 dans laquelle le module de traitement (34) transfère des déclencheurs d'impression à la tête d'impression (10) à une pluralité d'intervalles d'impression différents.

12. La méthode telle que revendiquée dans la revendication 10 ou la revendication 11 dans laquelle les intervalles d'impression sont sélectionnables.

13. La méthode telle que revendiquée dans n'importe lesquelles des revendications 9 à 12 dans laquelle l'unité fixe de déplacement spatial de la tête d'impression (10) est inférieure à 20 µm.

14. La méthode telle que revendiquée dans la revendication 13 dans laquelle l'unité fixe de déplacement spatial de la tête d'impression (10) est inférieure à 5 µm.

15. La méthode telle que revendiquée dans la revendication 14 dans laquelle l'unité fixe de déplacement spatial de la tête d'impression (10) est de 1 µm.

16. La méthode telle que revendiquée dans n'importe lesquelles des revendications 9 à 15 dans laquelle les intervalles d'impression sont sélectionnables dans les limites de l'unité fixe de déplacement spatial.

17. La méthode telle que revendiquée dans n'importe lesquelles des revendications 9 à 16, la méthode incluant l'étape consistant à imprimer des gouttes de liquide sur un substrat en réponse à des données reçues par la tête d'impression (10).

18. La méthode telle que revendiquée dans la revendication 17, la méthode incluant les étapes consistant à imprimer un ensemble de taches.

19. La méthode telle que revendiquée dans n'importe lesquelles des revendications 9 à 18 dans laquelle les buses (12) de la tête d'impression (10) sont arrangées en groupes (15a, 15b, 15c), chaque groupe comprenant une pluralité de buses (12), et chaque groupe correspondant à un liquide particulier.

20. La méthode telle que revendiquée dans la revendication 19 dans laquelle les buses (12) dans chaque groupe (15a, 15b, 15c) sont contiguës.

21. La méthode telle que revendiquée dans n'importe lesquelles des revendications 9 à 20 comprenant l'étape supplémentaire consistant à :
- transférer des déclencheurs d'impression à la tête d'impression (10) à une série d'intervalles d'impression correspondant à la séparation spatiale des buses de tête d'impression (12).

22. La méthode telle que revendiquée dans n'importe lesquelles des revendications 9 à 21 comprenant les étapes supplémentaires consistant à :
- transférer des déclencheurs d'impression à la tête d'impression (10) à un intervalle d'impression correspondant au déplacement spatial nécessaire de l'ensemble de taches et un deuxième ensemble répété de taches.

23. La méthode telle que revendiquée dans n'importe lesquelles des revendications 9 à 22 comprenant les étapes supplémentaires consistant à :
- transférer des déclencheurs d'impression à la tête d'impression (10) à un intervalle d'impression correspondant au déplacement spatial nécessaire du substrat et transférer des déclencheurs d'impression à un deuxième substrat ;
- imprimer des gouttes sur le deuxième substrat.

24. La méthode telle que revendiquée dans n'importe lesquelles des revendications 9 à 23 comprenant l'étape supplémentaire consistant à :
- transférer des données d'impression à la tête d'impression (10) auxdits intervalles d'impression.

25. Une méthode d'impression sur un substrat comprenant les étapes consistant à :
- déclencher une tête d'impression (10) par la méthode de n'importe lesquelles des revendications 9 à 24 ;
- déplacer la tête d'impression (10) relativement au substrat le long d'un premier axe, la tête d'impression ayant un ensemble linéaire de buses (12) orientées dans l'axe,
- superposer des gouttes d'un premier liquide à un premier emplacement sur le substrat, dans laquelle au moins deux gouttes du premier liquide sont imprimées à partir de buses distinctes (12).

26. Une méthode d'impression sur un substrat comprenant les étapes consistant à :
- déclencher une tête d'impression (10) par la méthode de n'importe lesquelles des revendications 9 à 24 ;
- imprimer une première goutte d'un premier liquide depuis une première buse (12) de la tête d'impression (10) à un premier emplacement ; déplacer la tête d'impression (10) relativement au substrat le long de l'axe (16) de telle sorte que la position d'une deuxième buse (12) de la tête d'impression (10) corresponde au premier emplacement ;
- imprimer une deuxième goutte du premier liquide depuis la deuxième buse (12) de la tête d'impression (10) au premier emplacement.
